# EUROPEAN PATENT APPLICATION

(11) **EP 3 477 733 A1**
(43) Date of publication of application: **01.05.2019**
(21) Application number: 17833514.7
(22) Date of filing: 24.07.2017
(51) Int. Cl.: H01M 2/12

(54) **EXPLOSION-PROOF VALVE, COVER PLATE ASSEMBLY, AND BATTERY**

(30) Priority: 29.07.2016 CN 201620809150 U; 29.07.2016 CN 201620818942 U
(71) Applicant: BYD Company Limited, Shenzhen, Guangdong 518118 (CN)
(72) Inventor: JIANG, Luxia, Shenzhen Guangdong 518118 (CN); HU, Shichao, Shenzhen Guangdong 518118 (CN); LU, Peng, Shenzhen Guangdong 518118 (CN); WANG, Xinyue, Shenzhen Guangdong 518118 (CN); ZHU, Jianhua, Shenzhen Guangdong 518118 (CN); ZHU, Yan, Shenzhen Guangdong 518118 (CN)
(74) Representative: Hoffmann Eitle
(86) International application number: PCT/CN2017/094176
(87) International publication number: WO 2018/019211

(57) **Abstract**

The present disclosure provides an explosion-proof valve, a cover plate assembly, and a battery. The explosion-proof valve includes a base body and an explosion-proof membrane, where the explosion-proof membrane includes a welding portion at a peripheral edge and an opening portion in the middle; the opening portion of the explosion-proof membrane is provided with an explosion-proof notch; and a flexible buffer structure is further disposed between the explosion-proof notch and a welding seam between the welding portion and the base body.

## Description

### FIELD

The present disclosure relates to the field of batteries, and particularly to an explosion-proof valve mounted on a battery cover plate assembly, a cover plate assembly containing the explosion-proof valve and a battery.

### BACKGROUND

With the gradual development of science and technology, batteries are widely applied to vehicles, energy storage devices, electronic products and other devices, and furthermore, more and more people pay attention to the safety of the batteries. When a battery has a fault and a large amount of combustible gas is produced in the battery, the internal gas pressure of the battery significantly increases, so that if measures are not taken in time, explosion of the battery may be caused.

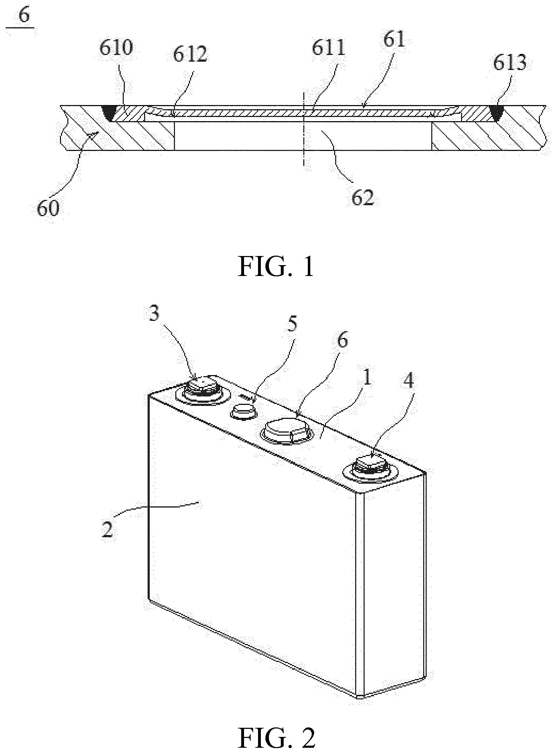

Therefore, in order to prevent occurrence of battery explosion, generally, an explosion-proof valve (or referred to as safety valve) is mounted on a battery cover plate. As shown in FIG. 1, the existing explosion-proof valve 6 includes a base body 60 and an explosion-proof membrane 61, where the explosion-proof membrane 61 includes a welding portion 610 at a peripheral edge and an opening portion 611 in the middle of the peripheral edge; a pressure relief hole 62 is provided in the base body 60; the welding portion 610 is welded on the base body 60, such that the opening portion 611 blocks the pressure relief hole 62; the opening portion 611 of the explosion-proof membrane 6 is provided with an explosion-proof notch 612; and when the welding portion 610 is welded with the base body 60, a welding seam 613 is formed at a welding point, and the welding seam 613 is filled with welding flux for welding. In this way, when the internal gas pressure of the battery exceeds an opening pressure of the explosion-proof valve 6, the explosion-proof valve 6 is opened to release the gas inside the battery so as to prevent battery explosion.

However, in a production process of the existing explosion-proof valve 6, during laser welding, two sides of the welding seam 613 shrink to the welding seam 613, so that the explosion-proof notch 612 is easily cracked or broken to cause failure of the explosion-proof valve 6. Furthermore, in the using process of the explosion-proof valve 6, the change of a pressure difference between inner and outer sides of the battery results in impact on the explosion-proof valve 6, and fatigue failure of the explosion-proof valve 6 is easily caused.

### SUMMARY

In order to overcome the problem in the prior art that in production processes of an explosion-proof valve, during laser welding, two sides of welding seams shrink to the welding seams, explosion-proof notches are easily cracked or broken and thus the explosion-proof valve fails, the present disclosure provides an explosion-proof valve, a cover plate assembly, and a battery.

One aspect of the present disclosure provides an explosion-proof valve, including a base body and an explosion-proof membrane, where the explosion-proof membrane includes a welding portion at a peripheral edge and an opening portion in the middle; a pressure relief hole is provided in the base body; the welding portion is welded on the base body, such that the opening portion blocks the pressure relief hole; the opening portion of the explosion-proof membrane is provided with an explosion-proof notch; and a flexible buffer structure is further disposed between the explosion-proof notch and a welding seam between the welding portion and the base body.

The flexible buffer structure is added on the explosion-proof membrane of the explosion-proof valve provided in the present disclosure, so that crack or breakage of the explosion-proof notches caused by shrinkage of two sides of the welding seams during laser welding can be effectively avoided so as to ensure the finished product rate of the explosion-proof valve in production processes. Furthermore, by using the above flexible buffer structure, the uniformity and reliability of the starting pressure of the explosion-proof valve can be greatly improved, and the fatigue resistance of the explosion-proof valve can also be well improved.

Further, a mounting step is arranged on the base body, the mounting step includes a support surface and a side surface, the welding portion of the explosion-proof membrane is supported on the support surface, and the welding seam is formed between the welding portion and the side surface of the mounting step.

Further, the flexible buffer structure is annular.

Further, the flexible buffer structure includes one or more wave crests and/or wave troughs.

Further, the flexible buffer structure includes one wave crest and one wave trough.

Further, the thickness of the welding portion of the explosion-proof membrane is 0.2-0.8 mm, and the thickness of the opening portion of the explosion-proof membrane is 0.05-0.15 mm.

Further, a height difference between the wave crest and/or the wave trough and a surface of the opening portion is 1-8 times the thickness of the opening portion.

Further, a gas bag is further mounted on an upper surface of the explosion-proof membrane. The gas bag can isolate the high-temperature combustible gas inside the battery from the oxygen gas in the air to ensure that the battery does not ignite after the pressure is released so as to avoid secondary danger.

Further, a peripheral edge of the gas bag is coated with a sealant layer, the sealant layer includes an upper sealant layer and a lower sealant layer, and the peripheral edge of the gas bag is glued on the base body through the lower sealant layer and is pressed on the upper sealant layer through a pressing sheet.

Further, the gas storage capacity of the gas bag is 0.1-100 times a remaining inflatable volume inside a battery.

Further, the gas storage capacity of the gas bag is 1-50 times the remaining inflatable volume inside the battery.

Further, the gas storage capacity of the gas bag is 2-10 times the remaining inflatable volume inside the battery.

Further, the explosion-proof valve further includes a valve cover, the valve cover covers the explosion-proof membrane, and a flame-retardant structure is arranged between the explosion-proof membrane and the valve cover.

Further, the explosion-proof membrane is located at an inner end of the pressure relief hole, the valve cover covers an outer end of the pressure relief hole, and the flame-retardant structure is located in the pressure reliefhole.

Further, the flame-retardant structure is a microcapsule containing a flame-retardant agent.

The flexible buffer structure is added on the explosion-proof membrane of the explosion-proof valve provided in the present disclosure, so that crack or breakage of the explosion-proof notch caused by shrinkage of two sides of a welding seam during laser welding can be effectively avoided so as to ensure the finished product rate of the explosion-proof valve in a production process. Furthermore, by using the above flexible buffer structure, the uniformity and reliability of the starting pressure of the explosion-proof valve can be greatly improved, and the fatigue resistance of the explosion-proof valve can also be well improved.

A second aspect of the present disclosure provides a cover plate assembly, including a cover plate body, and the explosion-proof valve is disposed on the cover plate body.

The improved explosion-proof valve is mounted on the cover plate body of the cover plate assembly provided in the present disclosure, and the flexible buffer structure is added on the explosion-proof membrane of the explosion-proof valve, so that crack or breakage of the explosion-proof notch caused by shrinkage of two sides of the welding seam during laser welding can be effectively avoided so as to ensure the finished product rate of the explosion-proof valve in a production process. Furthermore, by using the above flexible buffer structure, the uniformity and reliability of the starting pressure of the explosion-proof valve can be greatly improved, and the fatigue resistance of the explosion-proof valve can also be well improved.

A third aspect of the present disclosure is further directed to a battery, including a shell, an electrode core, and the cover plate assembly, the cover plate assembly and the shell form a sealed space, and the electrode core is mounted in the sealed space.

The improved explosion-proof valve is mounted on the cover plate body of the cover plate assembly of the battery provided in the present disclosure, and the flexible buffer structure is added on the explosion-proof membrane of the explosion-proof valve, so that crack or breakage of the explosion-proof notch caused by shrinkage of two sides of the welding seam during laser welding can be effectively avoided so as to ensure the finished product rate of the explosion-proof valve in a production process. Furthermore, by using the above flexible buffer structure, the uniformity and reliability of the starting pressure of the explosion-proof valve can be greatly improved, and the fatigue resistance of the explosion-proof valve can also be well improved.

### BRIEF DESCRIPTION OF THE DRAWINGS

FIG. 1 is a schematic cross-sectional view of an explosion-proof valve according to the prior art;
FIG. 2 is a schematic three-dimensional diagram of a battery according to a specific implementation of the present disclosure;
FIG. 3 is a schematic cross-sectional view of a base body according to a specific implementation of the present disclosure;
FIG. 4 is a schematic cross-sectional view of an explosion-proof valve according to a specific implementation of the present disclosure;
FIG. 5 is a schematic cross-sectional view of an explosion-proof valve according to another specific implementation of the present disclosure;
FIG. 6 is a schematic diagram of a using state of the explosion-proof valve provided in FIG. 5;
FIG. 7 is a schematic three-dimensional diagram of a battery according to a specific implementation of the present disclosure;
FIG. 8 is a schematic cross-sectional view of a explosion-proof valve according to a specific implementation of the present disclosure; and
FIG. 9 is a schematic cross-sectional view of a explosion-proof valve according to a specific implementation of the present disclosure.

1: Cover plate body; 2: Shell; 3: First electrode assembly; 4: Second electrode assembly; 5: Liquid injection hole cover; 6: Explosion-proof valve; 60: Base body; 61: Explosion-proof membrane; 62: Pressure relief hole; 63: Gas bag; 631: Valve cover; 64: Sealant layer; 66: Flame-retardant structure; 65: Pressing sheet; 601: Mounting step; 610: Welding portion; 611: Opening portion; 612: Explosion-proof notch; 613: Welding seam; 614: Wave crest; 615: Wave trough; 630: Gas storage space; 6011: Support surface; 6012: Side surface; 641: Lower sealant layer; and 642: Upper sealant layer.

### DETAILED DESCRIPTION

To make the technical problems to be resolved by the present disclosure, technical solutions, and beneficial effects more comprehensible, the following further describes the present disclosure in detail with reference to the accompanying drawings and embodiments. It should be understood that the specific embodiments described therein are merely used for explain the present disclosure instead of limiting the present disclosure.

The battery, the cover plate assembly and the explosion-proof valve 6 provided in the present disclosure will be specifically explained in the present disclosure.

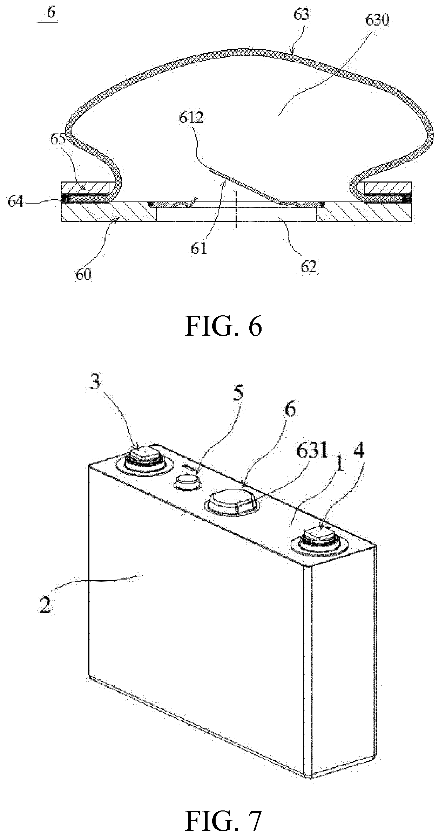

As shown in FIG. 2 and FIG. 7, an embodiment discloses a battery. The battery includes a shell 2, an electrode core, and a cover plate assembly. The cover plate assembly and the shell 2 form a sealed space, and the electrode core is mounted in the sealed space. The battery in this embodiment may be a lithium ion battery or may be another type of nickel battery, a lead-acid battery, or the like. The electrode core is formed by winding or superposing a positive electrode sheet, a diaphragm, and a negative electrode sheet, which is known to the public. The cover plate assembly includes a cover plate body 1, and an explosion-proof valve 6 is mounted on the cover plate body 1. Generally, a first electrode assembly 3 and a second electrode assembly 4 that are different in polarity are further mounted on the cover plate assembly in an insulated mode. Generally, the first electrode assembly 3 includes a first electrode, a first insulating part, and the like, and the first electrode and the cover plate body 1 are insulated by the first insulating part. Generally, the second electrode assembly 4 includes a second electrode, a second insulating part, and the like, and the second electrode and the cover plate body 1 are insulated by the second insulating part. When the first electrode is a positive electrode, the second electrode is a negative electrode; and otherwise, when the first electrode is a negative electrode, the second electrode is a positive electrode. The positive electrode is electrically connected to the positive electrode sheet of the electrode core, and the negative electrode is electrically connected to the negative electrode sheet of the electrode core. Generally, a liquid injection hole is further provided in the cover plate body 1, and the liquid injection hole is covered with a liquid injection hole cover 5.

Because the present disclosure does not improve the structure other than the explosion-proof valve 6 on the cover plate assembly of the battery, only the structure of the explosion-proof valve 6 is specifically explained below.

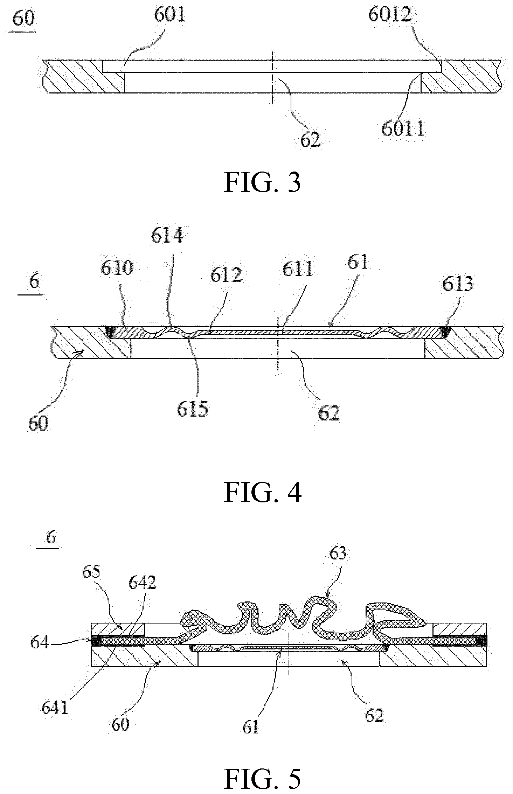

As shown in FIG. 3, FIG. 4, FIG. 8, and FIG. 9, the explosion-proof valve 6 provided in this embodiment includes a base body 60 and an explosion-proof membrane 61, where the explosion-proof membrane 61 includes welding portions 610 at peripheral edges and an opening portion 611 in the middle; a pressure relief hole 62 is provided in the base body 60; the welding portions 610 are welded on the base body 60, such that the opening portion 611 blocks the pressure relief hole 62; and the opening portion 611 of the explosion-proof membrane 61 is provided with explosion-proof notches 612.

Because the explosion-proof membrane 61 is mounted on the base body 60 in a mode of welding, when the explosion-proof membrane 61 is tightly tensioned, the explosion-proof membrane 61 is easily damaged in the welding process. Therefore, a flexible buffer structure is further disposed between the explosion-proof notch 612 and a welding seam 613 between the welding portion 610 and the base body 60 (as shown in FIG. 1, FIG. 4, FIG. 8, and FIG. 9). The flexible buffer structure may effectively relieve the condition of crack or breakage of the explosion-proof membrane 61 caused by welding.

The welding portion 610 of the explosion-proof membrane 61 is used for welding with the base body 60, the opening portion 611 is mainly used for achieving an explosion-proof function, and the thickness of the opening portion 611 is generally thinner than the welding portion 610, that is, the middle part of the explosion-proof membrane 61 is press-thinned to form the opening portion 611.

Specifically, as shown in FIG. 3, FIG. 8, and FIG. 9, a mounting step 601 is arranged on the base body 60, and the mounting step 601 includes a support surface 6011 and a side surface 6012; the welding portion 610 of the explosion-proof membrane 61 is supported on the support surface 6011, and a welding seam 613 is formed between the welding portion 610 and the side surface 6012 of the mounting step 601; and the welding portion 610 is welded in the mounting step 601 through the welding seam 613. Welding may be laser welding or braze welding. The base body 60 is used as a mounting carrier for mounting the explosion-proof membrane 61; and furthermore, the base body 60 is used for welding with the cover plate body 1 (or the base body 60 may be mounted on the shell 2, and in this embodiment, the base body 60 is mounted on the cover plate body 1 selectively), or the base body 60 may also be subjected to integral punch forming with the cover plate body 1 to serve as a part of the cover plate body 1. That is, the base body 60 may be a structure independent of the cover plate body 1 or the shell 2, or may be integrally formed with the cover plate body 1 or the shell 2, in other words, the base body 60 of the explosion-proof valve 6 may be formed as a part of the cover plate body 1 or the shell 2.

The flexible buffer structure refers to a structure having a certain buffer deformation, and is integrally formed on the explosion-proof membrane 61. When the explosion-proof membrane 61 is welded in the mounting process, although two ends of the welding seam 613 still shrink to the welding seam 613, the explosion-proof membrane 61 may extend to the welding seam 613 at the flexible buffer structure because of the existence of the flexible buffer structure. Therefore, in the welding process, the explosion-proof membrane 61 cannot be cracked or broken. Furthermore, in a using process, even if the change of a pressure difference between inner and outer sides of the battery generates impact on the explosion-proof valve 6, because of the existence of the flexible buffer structure, in a range of the opening pressure of the explosion-proof membrane 61, impact on the explosion-proof valve 6 caused by the change of the pressure difference between the inner and outer sides of the battery can be effectively relieved, so as to prevent failure of the explosion-proof valve 6.

A material of the explosion-proof membrane 61 may be an aluminum foil well known by those skilled in the art, or may be another material well known by those skilled in the art.

This embodiment does not specifically limit a disposing position of the flexible buffer structure. In a preferred manner, as shown in FIG. 4, the flexible buffer structure is disposed between the explosion-proof notch 612 and the welding seam 613.

Specifically, the flexible buffer structure is annular. The shape and the size of the flexible buffer structure are not specifically limited as long as the shape and the size may ensure that in the welding process, the explosion-proof membrane 61 cannot be damaged and the design opening pressure of the explosion-proof membrane 61 cannot be influenced. For example, the flexible buffer structure includes one or more wave crests 614 and/or wave troughs 615. In this embodiment, the flexible buffer structure includes one wave crest 614 and one wave trough 615. The thickness of the welding portion 610 of the explosion-proof membrane 61 is 0.2-0.8 mm, and the thickness of the opening portion 611 of the explosion-proof membrane 61 is 0.05-0.15 mm.

Furthermore, the height and the width of the wave crest 614 and/or the wave trough 615 are not specifically limited. In research and development processes, the applicant finds that using the flexible buffer structure including one wave crest 614 and one wave trough 615 as an example, it is more reasonable that a height difference between the wave crest 614 and the wave trough 615 and a surface of the opening portion 611 is 1 to 8 times the thickness of the opening portion 611. Further preferably, the height difference between the wave crest 614 and the wave trough 615 and the surface of the opening portion 611 is 1-5 times the thickness of the opening portion 611. The height difference herein refers to a distance between a highest point of the wave crest 614 and an upper surface of the opening portion 611 and a distance between a lowest point of the wave trough 615 and a lower surface of the opening portion 611.

According to the explosion-proof valve 6, the cover plate assembly mounted with the explosion-proof valve 6 and the battery including the cover plate assembly, provided in the present disclosure, because the flexible buffer structure is added on the explosion-proof membrane 61 of the improved explosion-proof valve 6, crack or breakage of the explosion-proof notches 612 caused by shrinkage of two sides of the welding seams 613 during laser welding can be effectively avoided, so as to ensure the finished product rate of the explosion-proof valve 6 in a production process. Furthermore, by using the above flexible buffer structure, the uniformity and reliability of the starting pressure of the explosion-proof valve 6 may be greatly improved, and the fatigue resistance of the explosion-proof valve 6 may also be well improved.

However, in battery research, development and production processes of the battery, the inventors of the present disclosure find that in the prior art, for a battery including a pressure-controlled explosion-proof valve, especially a lithium ion battery of a ternary positive electrode material, when an internal temperature of the battery reaches a thermal runaway temperature of the positive electrode material of the battery, the battery is out of control, but the internal pressure of the battery is still small, so that the pressure-controlled explosion-proof valve cannot be started; then, after 3-5 seconds of temperature rise, the temperature rises instantly, and the internal pressure rises instantly; at this moment, although the pressure-controlled explosion-proof valve including one or more layers of pressure-controlled explosion-proof membranes is arranged, a large amount of combustible gas produced inside the battery is instantly ejected from the pressure-controlled explosion-proof valve, so that the risk of battery combustion or explosion still exists.

Therefore, in a further improved mode, as shown in FIG. 5, in some embodiments of the present disclosure, a gas bag 63 is further mounted on an upper surface of the explosion-proof membrane 61. The gas bag 63 is used for storing high-temperature combustible gas produced inside the battery, so that the gas bag 63 needs to have high temperature resistance and also have certain elasticity. When the internal gas is ejected out of the pressure relief hole 62, the gas bag 63 may be quickly opened to contain the high-temperature combustible gas. The gas bag 63 has a compressed shape in a normal state shown in the figure; and when the battery is abnormal and the pressure of the battery is released, the gas bag 63 is opened to be in a state shown in FIG. 6. The gas bag 63 may isolate the high-temperature combustible gas inside the battery from oxygen gas in air to ensure that the battery does not ignite after the pressure is released, so as to avoid secondary danger.

The mounting mode of the gas bag 63 is not specifically limited as long as the mounting mode may ensure that the gas bag 63 may be fixed on the base body 60 and cannot leak gas. For example, in this embodiment, the gas bag 63 is mounted in the following mode: a peripheral edge of the gas bag 63 is coated with a sealant layers 64, the sealant layer 64 includes an upper sealant layer 642 and a lower sealant layer 641, and a peripheral edge of the gas bag 63 is glued on the base body 60 through the lower sealant layer 641 and is pressed on the upper sealant layers 642 through a pressing sheet 65. The pressing sheet 65 is used for pressing a bonded portion of the gas bag 63 so as to reinforce the bonding strength.

A material of the gas bag 63 is one of latex, natural rubber, ethylene-propylene-diene rubber, fluororubber, an aluminum foil, PA, or PE.

The gas storage capacity of the gas bag 63 may be determined according to gas yield inside the battery and a remaining inflatable volume inside the battery. In a design process, the gas storage capacity of the gas bag 63 may be obtained through tests and is not specifically limited. In an example, the gas storage capacity of the gas bag 63 is 0.1-100 times the remaining inflatable volume inside the battery. The remaining inflatable volume refers to a remaining space other than a space of a battery internal structure containing an electrode core, an electrolyte, and the like inside the battery. In a preferred manner, the gas storage capacity of the gas bag 63 is 1-50 times the remaining inflatable volume inside the battery. Further, the gas storage capacity of the gas bag 63 is 2-10 times the remaining inflatable volume inside the battery.

An explosion-proof principle of a battery having the explosion-proof valve 6 including the gas bag 63 in the present disclosure is as follows: as shown in FIG. 6, when the battery is abnormal, the improved explosion-proof valve 6 may be opened from the explosion-proof notch 612 under the set opening pressure, and the pressure of the battery is released so as to prevent battery explosion. Furthermore, the gas bag 63 is opened to form a gas storage space 630, and the gas storage space 630 stores internal high-temperature combustible gas and isolate the same from oxygen gas in air to ensure that the battery does not ignite after the pressure is released, so as to avoid secondary danger.

In a preferred manner, as shown in FIG. 7, the explosion-proof valve 6 further includes a valve cover 631, and the valve cover is further mounted on the base body 60 to be used for preventing the explosion-proof valve 6 from being damaged by external force.

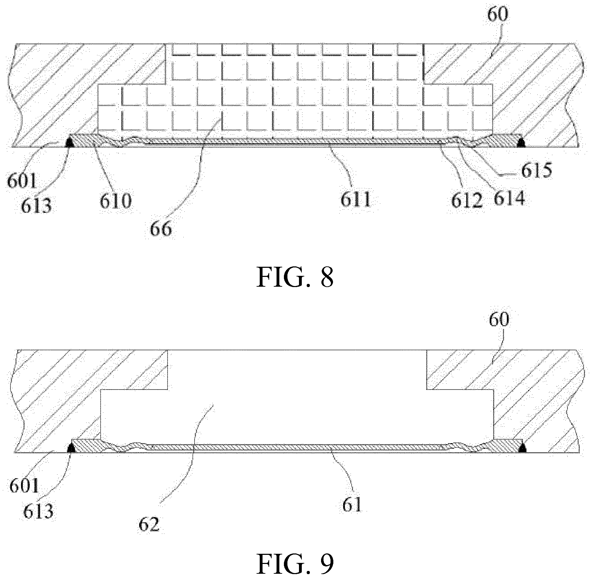

In addition, as shown in FIG. 8, in some other embodiments of the present disclosure, a flame-retardant structure 66 is further disposed between the explosion-proof membrane 61 and the valve cover 631. The flame-retardant structure 66 prevents external oxygen gas from entering when the explosion-proof valve 6 is opened and the pressure is released, thereby effectively preventing occurrence of combustion or explosion inside the battery.

The specific structure and material of the flame-retardant structure 66 are not specifically limited as long as the structure and the material may ensure that the combustible gas inside the battery leaks out through the flame-retardant structure 66 in time and the flame-retardant structure 66 may form an oxygen-deficient state, so as to prevent external oxygen gas from entering. For example, an inner part of the flame-retardant structure 66 has a gap (or hole), and the like, so that under the condition that the internal pressure is larger, the combustible gas inside the battery may leak out through the gap in time, and the oxygen gas difficultly enters the battery through the gap.

The flame-retardant structure 66 contains a flame-retardant agent. The flame-retardant agent may be in a form of solid powder, and the flame-retardant structure 66 is formed by compressing and ramming the flame-retardant agent in the form of solid powder. Alternatively, the flame-retardant structure is a microcapsule containing the flame-retardant agent. The flame-retardant agent may be configured as an organic flame-retardant agent, an inorganic flame-retardant agent, or a mixed flame-retardant agent formed by mixing the inorganic flame-retardant agent with the organic flame-retardant agent. The organic flame-retardant agent includes one or more of a halogen-based flame-retardant agent, a phosphorus-based flame-retardant agent, a nitrogen-based flame-retardant agent, and a phosphorus-halogen-based flame-retardant agent. The inorganic flame-retardant agent includes one or more of antimonous oxide, magnesium hydroxide, aluminum hydroxide, and silicon-based oxides. The mixed flame-retardant agent is formed by mixing the organic flame-retardant agent with the inorganic flame-retardant agent. For example, this embodiment provides an improved mixed flame-retardant agent, and the mixed flame-retardant agent includes red phosphorus, aluminum hydroxide, and expanded graphite.

The valve cover 631 is mounted on the base body 60 to be used for preventing the explosion-proof valve 6 from being damaged by external force. Generally, the valve cover 631 has a ventilation hole for removing gas released by opening the explosion-proof valve. Specifically, the explosion-proof membrane 61 is located at the inner end of the pressure relief hole 62, the valve cover 631 covers the outer end of the pressure relief hole 62, and the flame-retardant structure 66 is located in the pressure relief hole 62.

An explosion-proof principle of the battery having the explosion-proof valve 6 with the flame-retardant structure is as follows: when the pressure rises due to abnormity inside the battery and the internal gas pressure increases to the opening pressure of the explosion-proof membrane 61, the explosion-proof membrane 61 is opened from the explosion-proof notch 612; at this moment, because of the existence of the flame-retardant structure 66, the explosion-proof valve is in a local oxygen-deficient state, and then, a high-temperature combustible matter ejected from the battery is difficult to ignite under the local oxygen-deficient condition; and therefore, the explosion-proof valve is able to release pressure in time when the battery is abnormal, and a flame-retardant function may also be achieved at the explosion-proof valve 6 to isolate external oxygen gas from entering the battery, thereby effectively preventing occurrence of battery combustion and explosion accidents.

The foregoing descriptions are merely preferred embodiments of the present disclosure, but are not intended to limit the present disclosure. Any modification, equivalent replacement, or improvement made within the spirit and principle of the present disclosure shall fall within the protection scope of the present disclosure.

## Claims

1. An explosion-proof valve, comprising a base body and an explosion-proof membrane, wherein the explosion-proof membrane comprises a welding portion at a peripheral edge and an opening portion in the middle;
a pressure relief hole is provided in the base body; the welding portion is welded on the base body, such that the opening portion blocks the pressure relief hole; the opening portion of the explosion-proof membrane is provided with an explosion-proof notch; and
a flexible buffer structure is further disposed between the explosion-proof notch and a welding seam between the welding portion and the base body.

2. The explosion-proof valve according to claim 1, wherein a mounting step is disposed on the base body, and the mounting step comprises a support surface and a side surface; and
the welding portion of the explosion-proof membrane is supported on the support surface, and the welding seam is formed between the welding portion and the side surface of the mounting step.

3. The explosion-proof valve according to claim 2, wherein the flexible buffer structure is annular.

4. The explosion-proof valve according to claim 3, wherein the flexible buffer structure comprises one or more wave crests and/or wave troughs.

5. The explosion-proof valve according to claim 4, wherein the flexible buffer structure comprises one wave crest and one wave trough.

6. The explosion-proof valve according to claim 4, wherein the thickness of the welding portion of the explosion-proof membrane is 0.2-0.8 mm, and the thickness of the opening portion of the explosion-proof membrane is 0.05-0.15 mm.

7. The explosion-proof valve according to claim 6, wherein a height difference between the wave crest and/or the wave trough and a surface of the opening portion is 1-8 times the thickness of the opening portion.

8. The explosion-proof valve according to claim 1, wherein a gas bag is further mounted on an upper surface of the explosion-proofmembrane.

9. The explosion-proof valve according to claim 8, wherein a peripheral edge of the gas bag is coated with a sealant layer, the sealant layer comprises an upper sealant layer and a lower sealant layer, and the peripheral edge of the gas bag is glued on the base body through the lower sealant layer and is pressed on the upper sealant layer through a pressing sheet.

10. The explosion-proof valve according to claim 8, wherein the gas storage capacity of the gas bag is 0.1-100 times a remaining inflatable volume inside a battery.

11. The explosion-proof valve according to claim 10, wherein the gas storage capacity of the gas bag is 1-50 times the remaining inflatable volume inside the battery.

12. The explosion-proof valve according to claim 11, wherein the gas storage capacity of the gas bag is 2-10 times the remaining inflatable volume inside the battery.

13. The explosion-proof valve according to claim 1, further comprising a valve cover, wherein the valve cover covers the explosion-proof membrane, and a flame-retardant structure is disposed between the explosion-proof membrane and the valve cover.

14. The explosion-proof valve according to claim 13, wherein the explosion-proof membrane is located at an inner end of the pressure relief hole, the valve cover covers an outer end of the pressure relief hole, and the flame-retardant structure is located in the pressure relief hole.

15. The explosion-proof valve according to claim 13, wherein the flame-retardant structure is a microcapsule containing a flame-retardant agent.

16. A cover plate assembly, comprising a cover plate body, wherein the explosion-proof valve according to any one of claims 1-15 is disposed on the cover plate body.

17. A battery, the battery comprising a shell, an electrode core, and a cover plate assembly, wherein the cover plate assembly and the shell form a sealed space, and the electrode core is mounted in the sealed space; and the cover plate assembly is the cover plate assembly according to claim 16.
